Europäisches Patentamt

European Patent Office

Office européen des brevets

(19)

(11) **EP 1 032 921 B1**

(12) **EUROPÄISCHE PATENTSCHRIFT**

(45) Veröffentlichungstag und Bekanntmachung des Hinweises auf die Patenterteilung:
**19.09.2001 Patentblatt 2001/38**

(21) Anmeldenummer: **98961218.9**

(22) Anmeldetag: **18.11.1998**

(51) Int Cl.⁷: **G06T 15/20**

(86) Internationale Anmeldenummer:
**PCT/EP98/07387**

(87) Internationale Veröffentlichungsnummer:
**WO 99/26200 (27.05.1999 Gazette 1999/21)**

(54) **VERFAHREN UND VORRICHTUNG ZUM GRAPHISCHEN DARSTELLEN EINES DURCH EINE MEHRZAHL VON DREIECKEN DEFINIERTEN OBJEKTS AUF EINER ANZEIGEFLÄCHE**

METHOD AND DEVICE FOR GRAPHIC REPRESENTATION OF AN OBJECT DEFINED BY A PLURALITY OF TRIANGLES ON A DISPLAY SURFACE

PROCEDE ET DISPOSITIF DE REPRESENTATION GRAPHIQUE D'UN OBJET DEFINI PAR UNE PLURALITE DE TRIANGLES SUR UNE SURFACE D'AFFICHAGE

(84) Benannte Vertragsstaaten:
**DE GB IE**

(30) Priorität: **18.11.1997 DE 19751058**

(43) Veröffentlichungstag der Anmeldung:
**06.09.2000 Patentblatt 2000/36**

(73) Patentinhaber: **SP3D Chip Design GmbH 82319 Starnberg (DE)**

(72) Erfinder: **CICHON, Gordon D-80807 München (DE)**

(74) Vertreter: **Schoppe, Fritz, Dipl.-Ing. et al Schoppe, Zimmermann & Stöckeler Patentanwälte Postfach 71 08 67 81458 München (DE)**

(56) Entgegenhaltungen:
• **BLOOMENTHAL UND ROCKNE: "HOMOGENEOUS COORDINATES" VISUAL COMPUTER, Bd. 11, Nr. 1, 1994, Seiten 15-26, XP002098229 GERMANY**
• **ABI-EZZI S S ET AL: "FACTORING A HOMOGENEOUS TRANSFORMATION FOR A MORE EFFICIENT GRAPHICS PIPELINE" COMPUTERS AND GRAPHICS, Bd. 15, Nr. 2, 1. Januar 1991, Seiten 249-258, XP000293298**
• **VANARSDALE: "HOMOGENEOUS TRANSFORMATION MATRICES FOR COMPUTER GRAPHICS" COMPUTERS & GRAPHICS, Bd. 18, Nr. 2, März 1994, Seiten 177-191, XP002098230 UK**

**Beschreibung**

Die vorliegende Erfindung bezieht sich auf Computersysteme und insbesondere auf Graphikverarbeitungssysteme, welche Objekte, die in einem Objektkoordinatensystem gegeben sind, auf einer Anzeigefläche graphisch darstellen oder "rendern".

Seit längerem sind Verfahren zum Aufbereiten von Objektkoordinatensystemdaten in Anzeigekoordinatensystemdaten ("Screen-Space"-Daten) bekannt. Eine umfassende Beschreibung eines bekannten Verfahrens findet sich in dem Buch mit dem Titel "Computer Graphics, Principles an Practice", von Foley, van Dam, Feiner, Hughes, erschienen im Verlag Addison-Wesley Publishing Company, ISBN 0-201-84840-6. Üblicherweise werden Objekte durch Dreiecke in einem Objektkoordinatensystem oder "Object Space" gegeben. Ein Dreieck ist durch seine drei Eckpunkte $P_1$, $P_2$, $P_3$ definiert. Wenn eine dreidimensionale Graphikanwendung betrachtet wird, so benötigt jeder Punkt im dreidimensionalen Koordinatensystem drei Koordinatenwerte. Der Ursprung des dreidimensionalen rechtwinkeligen Koordinatensystems im Object Space oder objektkoordinatensystem kann beliebig gewählt werden. Wenn der darzustellende Gegenstand beispielsweise eine Kugel sein soll, so wird der Ursprung des Objektkoordinatensystems üblicherweise in den Mittelpunkt der Kugel gelegt. Die Darstellung im Objektkoordinatensystem ist somit von vorneherein gegeben und von einem Beobachterstandpunkt unabhängig.

Ein Beobachter soll sich nun im Raum bewegen können, und von seinem speziellen Standpunkt aus die in dem Objektkoordinatensystem definierten Flächen und damit Gegenstände betrachten zu können. Ein kleines Beispiel soll dies veranschaulichen. So sei z. B. an ein Haus gedacht, das in Objektkoordinaten eingegeben worden ist. Ein Beobachter soll sich nun diesem Haus beispielsweise von der Gartentüre nähern können, wobei es offensichtlich ist, daß er dann nur die Außenmauer erkennen kann, und keine Gegenstände im Inneren des Hauses. Außerdem kann der Beobachter immer nur eine Seite der Hauswand sehen, wobei die sichtbare Seite der Hauswand selbstverständlich die äußere Seite ist, wenn er sich außerhalb des Hauses befindet, oder aber die Innenwand eines Zimmers, wenn er sich innerhalb des Hauses befindet. Der Objektkoordinatensystemursprung könnte beispielsweise im Erdgeschoß liegen, wobei dann der Keller des Hauses negative y-Koordinaten im Objektkoordinatensystem haben wird, während der 1. Stock positive y-Koordinaten haben wird. Es ist also notwendig, die "absolut" im Objektkoordinatensystem gegebenen Polygone und damit Dreiecke zu verarbeiten, um nur den Gesichtsausschnitt des Beobachters auf einem Bildschirm darzustellen. Außerdem ist es notwendig, die Gegenstände im Haus auf dreidimensionale Art und Weise zu beleuchten bzw. zu schattieren, wobei die Lichtquelle, beispielsweise die Sonne oder eine Lampe in einem Zimmer zwar absolut in Objektkoordinaten festliegen kann, wobei der Beobachter jedoch abhängig von seinem Standpunkt andere beleuchtete Gegenstände sehen wird.

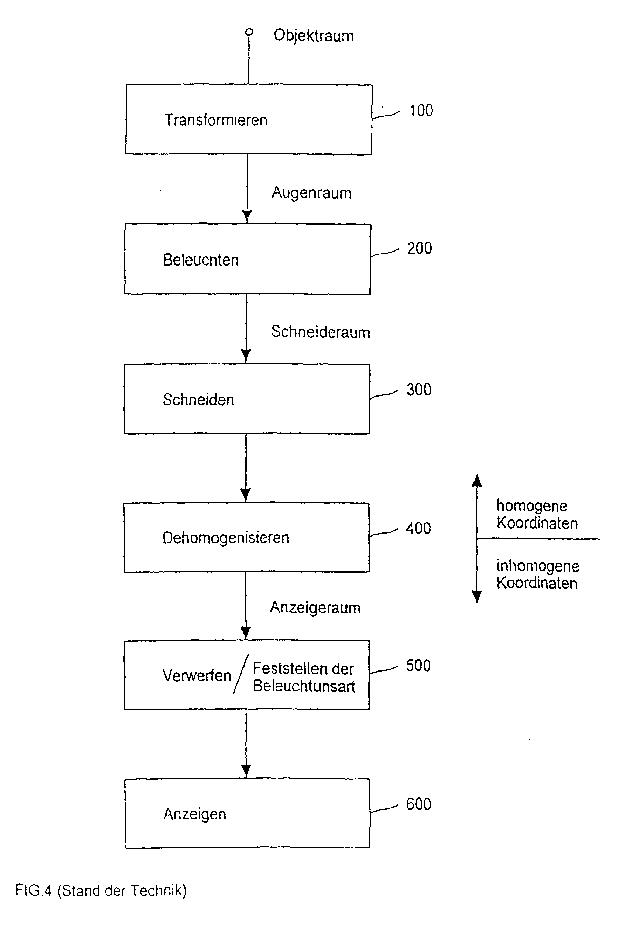

Fig. 4 zeigt ein Flußdiagramm eines bekannten Verfahrens zum Aufbereiten oder Rendern von Objektkoordinatensystemdaten, um dieselben auf einem Monitor anzeigen zu können. Ein solches Verfahren ist in J. D. Foley, A. Van Dam et al., "Computer Graphics", Addison-Wesley, 1996, Abbildung 18,7., gezeigt.

In einem ersten Schritt 100 wird eine Transformation der Objektkoordinatensystemdaten in einem Augenkoordinatensystem oder "Eye Space" durchgeführt, in dem notwendige Beleuchtungsberechnungen 200 durchgeführt werden. Vorzugsweise wird nach dem Beleuchten 200 im Augenkoordinatensystem eine perspektivische Projektion durchgeführt, um aus den ursprünglichen Objektkoordinaten Schneidekoordinaten oder "Clip-Space"-Koordinaten zu erhalten. Nach dem Schneiden oder Clippen 300 im Schneidekoordinatensystem findet eine Dehomogenisierung der homogenen Schneidekoordinaten statt.

Die Position eines Dreiecks im Objektkoordinatensystem wird üblicherweise redundant dargestellt, indem zu den drei Koordinaten für jeden Eckpunkt des Dreiecks im Koordinatensystem je ein Skalierungsfaktor hinzugefügt wird. Entsprechend der in der Technik verwendeten Terminologie wird eine eindeutig bestimmte Darstellung von Punkten als inhomogene Darstellung bezeichnet, während eine überbestimmte oder redundante Darstellung von Punkten als homogene Darstellung derselben bezeichnet wird. Wird ein Punkt auf einer zweidimensionalen Fläche mittels zweier Koordinaten dargestellt, so handelt es sich um eine inhomogene Darstellung desselben. Wird ein Punkt in einer Fläche mittels drei Koordinaten dargestellt, so ist diese Darstellung überbestimmt und wird als homogene Darstellung bezeichnet. In Analogie dazu kann ein Punkt im dreidimensionalen Koordinatensystem auf inhomogene Art und Weise durch seine x-, y- und z-Koordinate dargestellt werden, wenn der dreidimensionale Raum durch ein kartesisches Koordinatensystem definiert ist. Eine homogene Darstellung des Punkts im dreidimensionalen Raum wird durch die Angabe von 4 "Koordinaten" des Punkts, der sich im dreidimensionalen Raum befindet, erreicht. Die 4. Koordinate w ist definitionsgemäß ein Skalierungsfaktor. Eine homogene x-y-z-Koordinate wird durch Division mit dem Skalierungsfaktor w in eine homogene x-, y- bzw. z-Koordinate umgerechnet. Besitzt ein Punkt im Raum inhomogene Koordinaten von (1, 2, 3), so könnte seine homogene Darstellung (1, 2, 3, 1) oder (2, 4, 6, 2), usw. lauten.

Die homogene Darstellung eines Punkts im Raum hat den Vorteil, daß sich alle Transformationen, die in einer dreidimensionalen Graphikverarbeitung oder Graphik-Pipeline gewöhnlich auftreten (z. B. eine Translation, eine Rotation, eine Skalierung und insbesondere eine perspektivische Projektion) als Multiplikation der Position des Punktes mit einer 4x4-Transformationsmatrix darstellen lassen. Die in den Schritten 100, 200 und 300 verwendeten Koordinaten sind homogene Koordinaten, welche in dem Schritt des Dehomogenisierens 400 in inhomogene Koordinaten umgerechnet werden. Diese Dehomogenisierung geschieht auf einfache Art und Weise durch Division der homogenen x-, y-, z-Werte mit dem entsprechenden Skalierungsfaktor w dieses Punktes. Nach der Dehomogenisierung wird von Koordinaten im Anzeigekoordinatensystem oder "Screen-Space" gesprochen. Im Anzeigekoordinatensystem wird dann der Schritt 500 durchgeführt. In diesem Schritt werden Dreiecke verworfen ("Culling"), die nicht die gewünschte Ausrichtung haben. Im Falle der Verwendung einer zweiseitigen Beleuchtung ("Two-Sided-Lighting") werden Dreiecke mit unerwünschter Ausrichtung nicht verworfen, sondern lediglich anders beleuchtet. Der Schritt 500 bestimmt somit, welche Beleuchtungsart für ein Dreieck verwendet werden soll. Im Falle eines Hauses, bei dem die Außenmauer gleichzeitig die Innenmauer eines Zimmers ist, wird beispielsweise die Außenmauer gelb beleuchtet, wenn das Haus gelb angestrichen ist, während die Innenmauer des Zimmers weiß beleuchtet werden kann. Befindet sich also ein Beobachter außerhalb des Hauses, so stellt das Graphikaufbereitungsverfahren fest, daß hier nur Dreiecksflächen anzuzeigen sind, welche Außenwände darstellen, d. h. eine bestimmte Ausrichtung haben, während Innenwände, d. h. Dreiecksflächen mit einer entgegengesetzten Ausrichtung, ignoriert werden können. Im Falle nur einer Beleuchtungsart werden die Dreiecksflächen, deren Ausrichtung definitionsgemäß einer Innenraumausrichtung entspricht, weggeworfen, oder, im Falle einer zweiseitigen Beleuchtung, mit einer Beleuchtungsart versehen, die wiedergibt, daß es sich hier um eine Dreiecksfläche handelt, welche die Außenwand eines Hauses beschreiben soll.

An dieser Stelle sei darauf hingewiesen, daß in dem Schritt 200 beim bekannten Verfahren alle Dreiecke beleuchtet werden, bzw. daß für alle Dreiecke im Falle einer zweiseitigen Beleuchtung beide Beleuchtungsarten berechnet werden, obwohl im Schritt 500 statistisch gesehen die Hälfte der Dreiecke wieder verworfen wird, bzw. immer eine Beleuchtungsart eines Dreiecks von zwei Beleuchtungsarten ignoriert wird, wenn die Dreiecke dann schließlich in einem Schritt 600 auf einem Bildschirm angezeigt werden.

Abweichend von dem in Fig. 4 beschriebenen Stand der Technik können Dreiecke auch direkt im Objektkoordinatensystem beleuchtet werden, wonach die beleuchteten Objektkoordinatenflächen ohne den Umweg des Augenkoordinatensystems direkt in das Schneidekoordinatensystem (Clip Space) transformiert werden. Diese Verfahrensweise ist aus numerischen Überlegungen günstig, da die beleuchteten Objektkoordinaten mittels einer einzigen Matrix in das Schneidekoordinatensystem transformiert werden können, wobei diese kombinierte Transformationsmatrix aus einer Matrixmultiplikation der einzelnen Transformationsmatrixen entstanden ist.

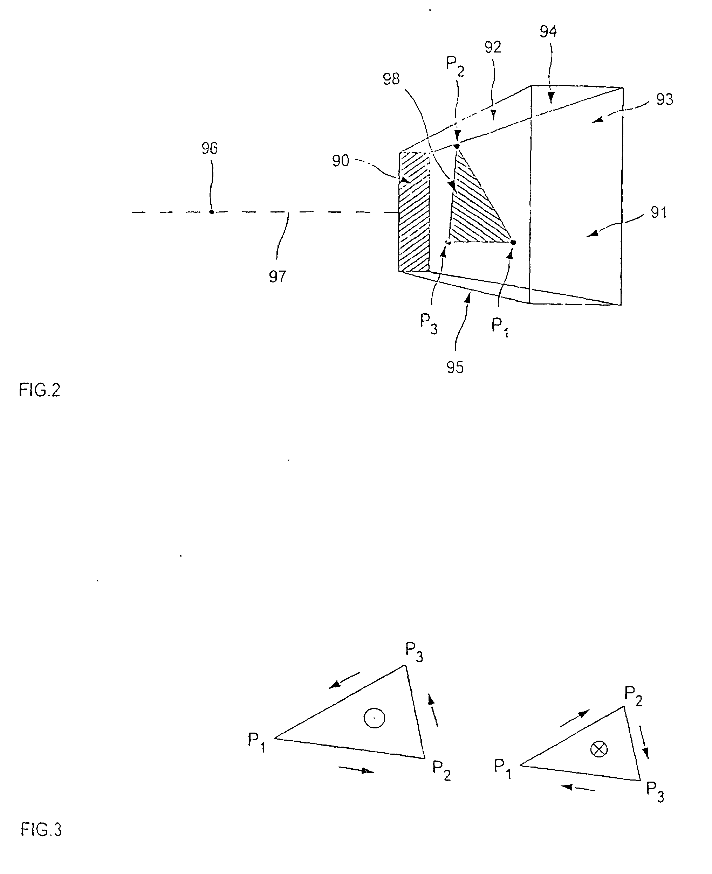

Im Nachfolgenden wird auf den Schritt 500 des Verwerfens ("Culling") von Dreiecken mit unerwünschter Ausrichtung eingegangen. Es wird zunächst die Ausrichtung eines Dreiecks bestimmt. Fig. 3 zeigt zwei Dreiecke, welche jedoch verschiedene Ausrichtungen haben. Die Ausrichtung wird durch den Drehsinn festgelegt, der sich ergibt, wenn der erste Eckpunkt $P_1$ mit dem zweiten Eckpunkt $P_2$ verbunden wird, und wenn dann der zweite Eckpunkt $P_2$ mit dem dritten Eckpunkt $P_3$ verbunden wird, und wenn dann der dritte Eckpunkt $P_3$ wieder mit dem ersten Eckpunkt $P_1$ verbunden wird, wie es durch die Pfeile in Fig. 3 dargestellt ist. Das linke Dreieck in Fig. 3 weist somit eine Ausrichtung aus der Zeichenebene heraus auf, während das rechte Dreieck eine Ausrichtung in die Zeichenebene hinein besitzt. Es sei angemerkt, daß diese Ausrichtung allein durch die Reihenfolge der Eckpunkte gegeben ist, also beliebig einstellbar ist, da ein auf einem Bildschirm angezeigtes Dreieck mit einer Ausrichtung im Uhrzeigersinn nicht von einem entsprechenden Dreieck mit einer Ausrichtung gegen den Uhrzeigersinn unterschieden werden kann, wenn die Dreiecke auf gleiche Art und Weise beleuchtet worden sind. So ist es beispielsweise möglich, bei dem bezüglich des Hauses eingeführten Beispiel alle Außenflächen des Dreiecks mit einer Ausrichtung gemäß dem linken Dreieck von Fig. 3 zu versehen, während alle Innenflächen des Hauses eine Ausrichtung gemäß dem rechten Dreieck von Fig. 3 haben. Hat ein Graphikaufbereitungsverfahren somit erkannt, daß sich ein Beobachter außerhalb des Hauses befindet, so kann dasselbe sofort alle Dreiecke mit der anderen Ausrichtung verwerfen, da die anderen Dreiecke bezüglich ihrer Definition Innenraumdreiecke sind.

Die Bestimmung der Ausrichtung der Fläche eines Dreiecks auf einer Anzeigefläche spielt also eine wichtige Rolle. Dieselbe bestimmt, ob der Beobachter auf die Vorderseite oder Rückseite des Dreiecks schaut. Aus der Geometrie ist es bekannt, die Ausrichtung eines Dreiecks zu berechnen, das von drei Punkten im Raum aufgespannt wird. Diese Ausrichtung ergibt sich aus dem Vorzeichen der z-Koordinate des Normalenvektors auf der Fläche des Dreiecks. Wenn das Dreieck schief im Raum steht, so wird der Normalenvektor ebenfalls eine Komponente in x-, eine Komponente in y- und eine Komponente in z-Richtung haben. Wird nun die Ausrichtung eines Dreiecks bezüglich einer Achse benötigt, auf der sich ein Beobachter befindet, so wird lediglich die Komponente des Normalenvektors parallel zu dieser Achse benötigt. Üblicherweise wird bei Graphikaufbereitungssystemen die horizontale Ausdehnung des Bildschirms parallel zur x-Achse sein, während die vertikale Ausdehnung des Bildschirms parallel zur y-Achse sein wird. Die z-Achse, die senkrecht auf der Bildschirm- oder Anzeigefläche steht, ist dann die Beobachtungsachse. Es wird also die Ausrichtung eines Dreiecks bezüglich dieser Beobachtungsachse benötigt. Dieselbe ergibt sich als die z-Komponente des Kreuzprodukts der 2 Richtungsvektoren, die erhalten werden, wenn die Position eines Eckpunkts eines Dreiecks von den beiden anderen Eckpunkten abgezogen werden. In Gleichungsform ausgedrückt lautet dieser Zusammenhang folgendermaßen:

$$a = [(v_2 - v_1) \times (v_3 - v_1)]_z \qquad (1)$$
$$= (x_2 - x_1)(y_3 - y_1) - (y_2 - y_1)(x_3 - x_1) \qquad (2)$$

In dieser Gleichung stellen $v_1$, $v_2$ und $v_3$ die Vektoren vom Ursprung des Koordinatensystems zu den drei Eckpunkten des Dreiecks, d. h. zu $P_1$, $P_2$ und $P_3$, dar. $P_1$ ist durch $(x_1, y_1)$ gegeben, $P_2$ ist durch $(x_2, y_2)$ gegeben, während $P_3$ durch $(x_3, y_3)$ gegeben ist. Die in den Gleichungen (1) und (2) verwendeten Punktkoordinaten sind inhomogene Koordinaten. Ungünstigerweise liegen jedoch inhomogene Koordinaten erst nach dem Dehomogenisieren 400 vor, da die vorher ausgeführten Operationen im wesentlichen aus numerischen Gründen in homogenen Koordinaten ausgeführt werden müssen. Dies ist auch der Grund, weshalb zunächst alle vorhandenen Dreiecke im Schritt 200 beleuchtet werden, wonach im Schritt 500 jedes zweite Dreieck wieder verworfen wird, wodurch eine bekannte Graphikpipeline eine wesentliche Menge an unnützem Prozessoraufwand durchführt, da im allgemeinen 50% des Rechenaufwands zur Beleuchtungsberechnung weiter hinten in der Graphikpipeline wieder weggeworfen wird.

Es sei darauf hingewiesen, daß eine Dehomogenisierung der inhomogenen Koordinaten vor dem Schritt des Beleuchtens nicht durchgeführt werden kann, da das Abschneiden oder Clippen in homogenen Koordinaten ausgeführt werden muß. Eine Voraussetzung für ein korrektes Clippen ist jedoch, daß vorher die Beleuchtungsoperationen durchgeführt werden, um eine Farbinterpolation möglich zu machen. Diese Zusammenhänge sind in der Fachwelt bekannt und werden daher an dieser Stelle nicht weiter ausgeführt.

Zusammenfassend kann also festgestellt werden, daß bei einer bekannten Graphikpipeline, unabhängig davon, ob das Beleuchten im Objektkoordinatensystem oder im Augenkoordinatensystem ausgeführt wird, ein wesentlicher unnötiger Mehraufwand vorhanden ist, da Dreiecke zunächst beleuchtet werden, die dann später verworfen werden, bzw. daß für jedes Dreieck beide Beleuchtungsarten berechnet werden, wobei später jedoch lediglich eine Beleuchtungsart zur Anzeige gebracht wird.

Die EP 0 740 272 A2 offenbart ein Verfahren und eine Vorrichtung zum schnellen Aufbereiten von dreidimensionalen Objekten. Dreiecke sind ursprünglich in einem Modellraum gegeben, der das Referenzkoordinatensystem für die Graphikdaten ist, die schließlich auf einem Bildschirm angezeigt werden sollen, der durch einen Geräteraum beschrieben ist, d. h. durch ein Anzeige- oder Bildschirmkoordinatensystem. Vor dem Transformieren der Dreiecke vom Modellraum in den Geräteraum, in dem das Beleuchten und Schneiden stattfindet, wird die Ausrichtung der Dreiecke bezüglich eines Beobachtungsstandpunkts festgestellt. Hierzu wird von einem Punkt des Dreiecks im Modellraum ein Vektor zum Beobachtungspunkt gebildet, der als Augenvektor bezeichnet wird. Anschließend wird der Normalvektor für das Dreieck entweder gelesen oder berechnet, um schließlich ein Skalarprodukt des Augenvektors und des Normalenvektors für das Dreieck zu berechnen. Dieses Skalarprodukt wird im Modellkoordinatensystem berechnet. Sein Vorzeichen gibt an, ob ein Dreieck vom Beobachter weg gerichtet ist oder zum Beobachter hin gerichtet ist. Diese Eigenschaft des Dreiecks wird in einer Liste gespeichert, auf die bei einer nachfolgenden Aufbereitung der Dreiecke zugegriffen wird, um im Falle des Verwerfens von vom Beobachterstandpunkt weggerichteten Dreiecken nur die Dreiecke transformieren zu müssen, die zum Beobachter hin gerichtet sind. In anderen Worten werden nur die Dreiecke, deren Listeneintrag eine Ausrichtung zum Beobachtungsstandpunkt hin angibt, vom Modellkoordinatensystem in das Gerätekoordinatensystem transformiert und dort beleuchtet und geschnitten, um nach einigen weiteren Schritten auf einem Bildschirm angezeigt zu werden.

Die Aufgabe der vorliegenden Erfindung besteht darin, ein effizienteres Konzept zum graphischen Darstellen eines Dreiecks zu schaffen.

Diese Aufgabe wird durch eine Vorrichtung und ein Verfahren zum graphischen Darstellen eines durch eine Mehrzahl von Dreiecken definierten Objekts gemäß Anspruch 1 bzw. 15 gelöst.

Der vorliegenden Erfindung liegt die Erkenntnis zugrunde, daß das Verwerfen von Dreiecken bzw. das definitive Feststellen der Beleuchtungsart bei zweiseitiger Beleuchtung vor dem Beleuchten ausgeführt werden muß, um unnötige Beleuchtungsberechnungen zu vermeiden. Wird das Verwerfen oder Culling von Dreiecken bereits in Schneidekoordinaten vor dem Schneiden ausgeführt, so ist es auch möglich, beim Schneiden (Clippen) Schneideoperationen einzusparen, welche beim Stand der Technik auch mit Dreiecken durchgeführt werden, welche schließlich doch verworfen werden und nicht auf einem Bildschirm angezeigt werden. Wie es aus Fig. 4 ersichtlich ist, erfordert das Verwerfen vor dem Beleuchten bzw. das Bestimmen der Beleuchtungsart eines Dreiecks bei zweiseitiger Beleuchtung, daß die Bestimmung der Ausrichtung eines Dreiecks mittels homogener Koordinaten durchgeführt wird. Bisher existierte jedoch lediglich eine Gleichung für inhomogene Koordinaten.

Um das Bestimmen der Ausrichtung eines Dreiecks in homogenen Koordinaten durchführen zu können, wird folgende Gleichung vorgeschlagen:

$$a'=w_1(x_2y_3-x_3y_2)+w_2(x_3y_1-x_1y_3)+ w_3(x_1y_2 - x_2y_1)$$

Wie es aus dieser Gleichung ersichtlich ist, werden homogene Koordinaten (x, y, w) verwendet, welche Koordinaten im Schneidekoordinatensystem sind, wobei das Vorzeichen von a' anzeigt, welche Ausrichtung die Fläche eines Dreiecks hat, das durch einen Punkt $P_1$, einen Punkt $P_2$ und einen Punkt $P_3$ gegeben ist. In der Gleichung wird vorausgesetzt, daß im Schneidekoordinatensystem die xy-Ebene der Schneidekoordinaten parallel zur Anzeigefläche ist, während eine Beobachterachse, bezüglich der die Ausrichtung der Fläche des Dreiecks bestimmt wird, senkrecht zur Anzeigefläche, d. h. senkrecht zur xy-Ebene des Schneidekoordinatensystems, ist.

Die vorstehende Gleichung erlaubt also die Berechnung der Ausrichtung eines Dreiecks, bevor dasselbe geschnitten wird. Erfindungsgemäß werden somit Dreiecke mit einer bestimmten Ausrichtung verworfen, bevor sie beleuchtet und geschnitten werden müssen. Im Falle einer zweiseitigen Beleuchtung werden die Dreiecke erfindungsgemäß nur noch auf der zum Betrachter gerichteten Seite beleuchtet. Es wird somit eine effizientere Graphikpipeline möglich, bei der das Verwerfen von Dreiecken mit einer bestimmten Ausrichtung oder die Seitenbestimmung zum zweiseitigen Beleuchtung durchgeführt wird, bevor das Beleuchten und Abschneiden an der Reihe ist.

Erfindungsgemäß wird somit am Beginn einer Graphikpipeline zunächst die Lage des Beobachterstandpunkts bezüglich jedes der Mehrzahl von Dreiecken durch Bestimmen der Ausrichtung jedes Dreiecks in Schneideraumkoordinaten festgestellt. Hierauf wird die Lage des Beobachterstandpunkts bezüglich jedes Dreiecks in Zuordnung zu den homogenen Objektkoordinaten der Mehrzahl von Dreiecken markiert, derart, daß die in Objektkoordinaten gegebenen Dreiecke nach der Markierung wie bekannt verarbeitet werden können, jedoch mit dem entscheidenden Unterschied zum Stand der Technik, daß lediglich die Dreiecke der gesamten Graphikpipeline unterzogen werden müssen, die schließlich auch aufgrund ihrer Ausrichtung anzuzeigen sind.

Im Falle einer einseitigen Beleuchtung wird durch die Markierung erreicht, daß lediglich die Dreiecke, die zu dem Beobachterstandpunkt hin gerichtet sind, aus allen Dreiecken im Objektraum ausgewählt werden, um dann beleuchtet, in den Schneideraum transformiert und geschnitten zu werden.

Im Falle des zweiseitigen Beleuchtens wird erfindungsgemäß vor dem Beleuchten und gegebenfalls vor der Transformation in das Augenkoordinatensystem die Beleuchtungsart bestimmt, derart, daß für jedes Dreieck nur eine Beleuchtungsoperation durchgeführt werden muß. und zwar für die Seite des Dreiecks, die dann auch für die Anzeige verwendet werden muß, d. h. die Seite des Dreiecks, die zu dem Beobachterstandpunkt hin gerichtet ist.

Im Falle des Verwerfens von Dreiecken einer bestimmten Ausrichtung ermöglichen die Verfahren und Vorrichtungen der vorliegenden Erfindung, daß statistisch gesehen nur die Hälfte aller Dreiecke beleuchtet und abgeschnitten werden müssen, wodurch somit eine Effizienzsteigerung von 50% beim Beleuchten und Abschneiden erreicht wird. Im Falle einer zweiseitigen Beleuchtung muß nur eine Beleuchtungsberechnung für jedes Dreieck anstatt zweier Beleuchtungsberechnungen für jedes Dreieck wie beim Stand der Technik ausgeführt werden, was ebenfalls statistisch gesehen eine Leistungssteigerung von 50% für den Beleuchtungsprozessor bringt.

Aus der vorangehenden kurzen Darstellung der Erfindung wird deutlich, daß die weiteren Schritte zum Darstellen eines Dreiecks nach der Ausrichtungsbestimmung und dem Verwerfen bzw. einseitigen Beleuchten für die Erfindung nicht wesentlich sind und auf beliebige bekannte Art und Weise ausgeführt werden können. So kann eine Beleuchtung wahlweise bereits im Objektkoordinatensystem oder nach einer Transformation in das Augenkoordinatensystem in diesem Koordinatensystem stattfinden.

Bevorzugte Ausführungsbeispiele der vorliegenden Erfindung werden nachfolgend bezugnehmend auf die beiliegenden Zeichnungen detaillierter erläutert. Es zeigen:

Fig. 1a      ein allgemeines Ablaufdiagramm für die vorliegende Erfindung;

Fig. 1b      eine detailliertere Darstellung des Verarbeitens aus Fig. 1a;

Fig. 2      eine Veranschaulichung der Situation im Schneidekoordinatensystem;

Fig. 3      ein Diagramm zur Erläuterung der Ausrichtung von Dreiecken;

Fig. 4      ein Ablaufdiagramm für ein bekanntes Verfahren zum graphischen Darstellen eines Dreiecks auf einem Bildschirm; und

Fig. 5      eine Schaltung zum Berechnen einer Gleichung zum Bestimmen der Ausrichtung eines Dreiecks mittels homogener Koordinaten.

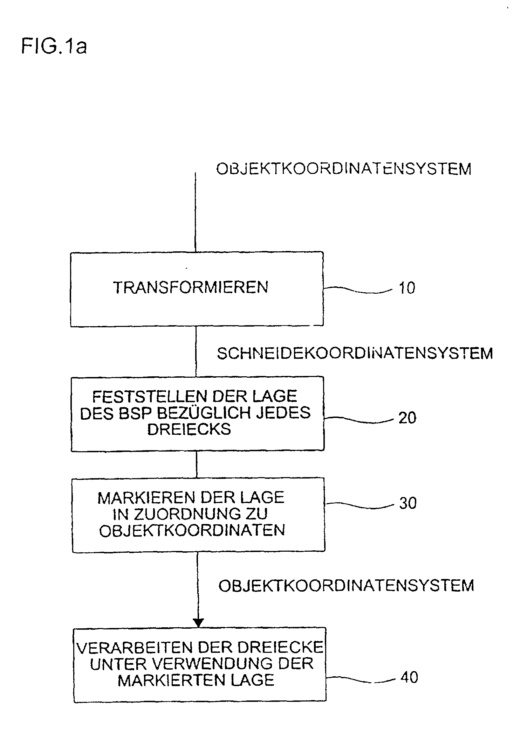

Fig. 1a zeigt ein schematisches Ablaufdiagramm zum graphischen Darstellen eines durch eine Mehrzahl von Dreiecken definierten Objekts, die durch drei Eckpunkte in homogenen Koordinaten in einem Objektkoordinatensystem gegeben ist, auf einer Anzeigefläche. Zunächst werden die Objektkoordinaten der entsprechenden Punkte auf bekannte Art und Weise in das Schneidekoordinatensystem transformiert (10). Im Schneidekoordinatensystem wird nun die Lage eines Beobachterstandpunkts bezüglich jedes der Mehrzahl von Dreiecken durch Bestimmen der Ausrichtung in dem Schneidekoordinatensystem bezüglich des Beobachterstandpunkts festgestellt (20). Die Lage jedes Dreiecks wird hierauf in Zuordnung zu den Objektkoordinaten der Dreiecke markiert (30). Anschließend werden die Dreiecke basierend auf dieser markierten Lage verarbeitet (40).

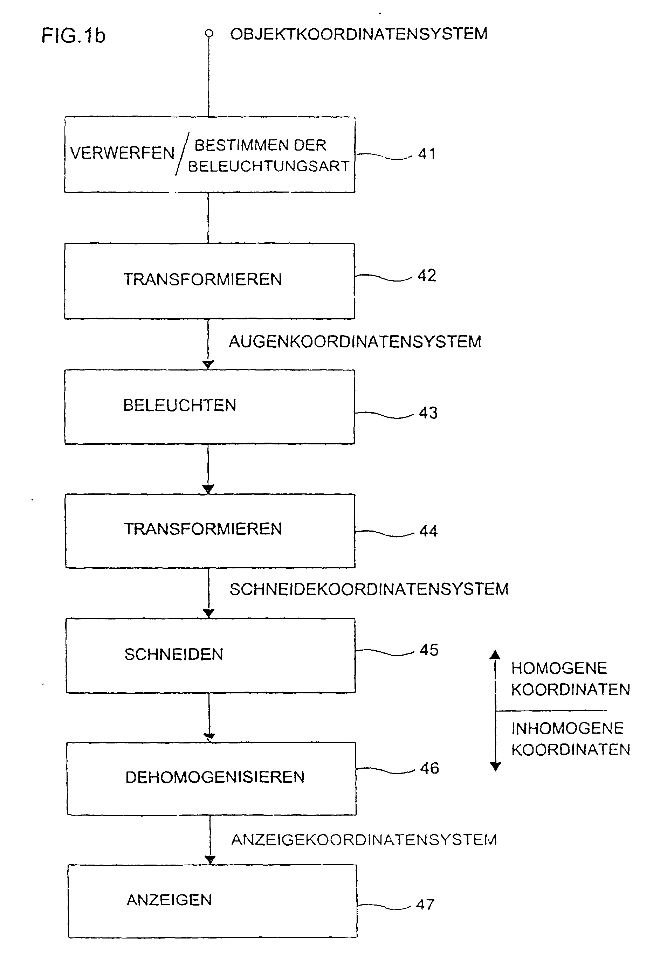

Gemäß einem ersten Aspekt der vorliegenden Erfindung wird ein Dreieck mit einer anderen als der gewünschten Ausrichtung verworfen (41, Fig. 1b), bevor dasselbe beleuchtet wird.

Gemäß einem zweiten Aspekt der vorliegenden Erfindung, bei dem eine zweiseitige Beleuchtung durchgeführt wird, wird bereits hier bestimmt (41, Fig. 1b), welche Seite eines Dreiecks schließlich auf der Anzeigefläche zu sehen sein wird.

Fig. 1b zeigt eine detailliertere Darstellung der Teilmerkmale, die durch die Einrichtung zum Verarbeiten aufgrund der markierten Lage ausgeführt werden können. Das Verwerfen bzw. Bestimmen der Beleuchtungsart (41) bereits mit homogenen Koordinaten ist ausschlaggebend dafür, daß das erfindungsgemäße Verfahren wesentlich weniger Prozessoraufwand als das bekannte Verfahren benötigt. Im Falle der zweiseitigen Beleuchtung ist es nun möglich, lediglich eine Beleuchtungsberechnung für ein auf der Anzeigefläche angezeigtes Dreieck durchzuführen, da bereits vor dem Beleuchten bestimmt ist, welche Seite des Dreiecks zum Beobachter hin gerichtet ist.

Nach dem Verwerfen bzw. Bestimmen der Beleuchtungsart (41) können nun die anzuzeigenden Dreiecke bzw. nur die anzuzeigenden Seiten der Dreiecke in das Augenkoordinatensystem transformiert werden (42), um dann beleuchtet zu werden (43), wonach nach einer Transformation (44) in das Schneidekoordinatensystem ein Schneiden (45) der beleuchteten Dreiecke durchgeführt wird. Nach dem Schneiden (45) werden die noch homogenen Punktkoordinaten der Dreiecke dehomogenisiert (46), wonach sie im Anzeigekoordinatensystem vorliegen, um nach einer einfachen Transformation in Pixelkoordinaten auf einer Anzeigefläche und vorzugsweise auf einem Bildschirm angezeigt zu werden (47).

An dieser Stelle sei angemerkt, daß, falls eine Beleuchtung in Objektkoordinaten durchgeführt wird, selbstveständlich auf die Transformation (42) vor dem Beleuchten verzichtet wird. Die Transformation in das Schneidekoordinatensystem der beleuchteten Dreiecke findet dann mit einer Transformationsmatrix statt, die eine Multiplikations der Transformationsmatrizen der Transformationen 42 und 44 ist. Diese Transformationsmatrix ist zu der Transformationsmatrix identisch, die zum Transformieren (10, Fig. 1a) aller Dreiecke in den Schneideraum, um ihre Lage bezüglich des Beobachterstandpunkts zu erhalten, eingesetzt wird.

Die Transfomationsmatrix zum Transfomieren der beleuchteten Dreiecke muß jedoch erfindungsgemäß lediglich die Dreiecke vom Objektkoordinatensystem in das Schneidekoordinatensystem transformieren, die aufgrund ihrer Ausrichtung für eine Anzeige in Frage kommen.

Aus Fig. 1a und 1b ist ersichtlich, daß das Verwerfen bzw. Feststellen der Beleuchtungsart (20) in homogenen Koordinaten und nicht in inhomogenen Koordinaten wie beim Stand der Technik durchgeführt wird. Inhomogene Koordinaten werden dort erst nach dem Schneiden berechnet.

Im nachfolgenden wird bezugnehmend auf Fig. 2 detailliert dargelegt, auf welche Art und Weise ein Verwerfen bzw. Feststellen der Beleuchtungsart durch Bestimmung der Ausrichtung eines Dreiecks mittels homogener Koordinaten möglich ist. In Fig. 2 ist ein Dreieck im dreidimensionalen Raum dargestellt, das durch folgende homogene Koordinaten gegeben ist:

$$v_1 = \begin{pmatrix} x_1 \\ y_1 \\ z_1 \\ w_1 \end{pmatrix}, \; v_2 = \begin{pmatrix} x_2 \\ y_2 \\ z_2 \\ w_2 \end{pmatrix}, \; v_3 = \begin{pmatrix} x_3 \\ y_3 \\ z_3 \\ w_3 \end{pmatrix} \qquad (3)$$

Das Dreieck wird üblicherweise an mehreren Schneideebenen geschnitten. Jede Schneideebene kann ein Stück des Dreiecks abschneiden. Im Fall einer perspektivischen Projektion, z. B. des Pyramidenstumpf-Schneidens ("Frustrum Clipping"), ist ein Schneidevolumen durch einen Pyramidenstumpf definiert, wie es in Fig. 2 gezeigt ist. Der Pyramidenstumpf weist eine nahe Ebene 90, eine ferne Ebene 91, eine linke Ebene 92, eine rechte Ebene 93, eine obere Ebene 94 und eine untere Ebene 95 auf. Die Bezeichnung oben, unten, links, rechts, nah und fern sind bezüglich eines Beobachterstandpunkts 96 definiert, der sich auf einer Beobachtungsachse 97 befindet, welche senkrecht auf der nahen Ebene 90 steht. Die nahe Ebene spielt hier eine spezielle Rolle, da sie Punkte hinter dem Beobachter, d. h. auf einer bezüglich des Beobachterstandpunkts 96 entgegengesetzten Seite der nahen Ebene 90, entfernt, welche in das Schneidevolumen hineingespiegelt werden würden, wenn eine Dehomogenisierung von nichtgeschnittenen Koordinaten durchgeführt werden würde.

Dieser Sachverhalt sei kurz erläutert. Die Darstellung in homogenen Koordinaten ist eine redundante Darstellung. Ein Punkt (1,0,0) in inhomogenen Koordinaten könnte durch einen Punkt (1,0,0,1) oder durch einen Punkt (-1,0,0,-1) in homogenen Koordinaten dargestellt werden. Da nach dem Dehomogenisieren jedoch kein w mehr vorhanden ist, geht das Vorzeichen von w verloren.

Wie es aus Fig. 2 ferner ersichtlich ist, entfernt die nahe Ebene nicht nur die Punkte hinter dem Beobachter, sondern auch Punkte zwischen dem Beobachter 96 und der nahen Ebene 90, wenn ein Anwendungsfall gewählt wird, bei dem der Beobachter einen bestimmten Abstand zu Objekten im Raum haben soll. Fig. 2 zeigt einen Fall, bei dem das Dreieck 98 vollständig hinter der nahen Ebene 90 liegt. Es ist jedoch auch der Fall denkbar, daß der Beobachterstandpunkt 96 entweder auf der nahen Ebene 90 liegt, oder daß ein Punkt eines beliebigen Dreiecks zwischen dem Beobachterstandpunkt 96 und der nahen Ebene 90 bzw. hinter dem Beobachter 96 liegt. Besonders der Fall, bei dem ein Punkt hinter dem Beobachter liegt, muß betrachtet werden, da sonst die beschriebene unerwünschte Spiegelung auftreten würde.

Es sei nun ein Dreieck betrachtet, bei dem zumindest ein Punkt ($P_1$) hinter der nahen Ebene 90, d. h. auf der bezüglich der nahen Ebene 90 entgegengesetzten Seite des Beobachterstandpunkts 96, liegt. Wenn nun ein Punkt $P_2$, der durch einen Vektor $v_2$ gegeben ist, vor der nahen Ebene 90 liegt, wird ein neuer Eckpunkt $v'_2$ berechnet, der der Schnittpunkt einer Verbindungslinie zwischen $v_1$ und $v_2$ und der nahen Ebene 90 ist. Der neue Eckpunkt $v'_2$ liegt somit auf der nahen Ebene 90. In Gleichungen ausgedrückt, läßt sich dieser Punkt $v'_2$ folgendermaßen berechnen:

$$v'_2 = v_1 + t_2(v_2 - v_1), \ t_2 \in (0,1). \tag{4}$$

Wenn $v_2$ hinter der nahen Ebene ist, muß für $t_2 = 1$ gesetzt werden, was dem einfachen Fall der Fig. 2 entspricht. Auf dieselbe Art und Weise kann der dritte Punkt $P_3$, wenn er zwischen dem Beobachterstandpunkt 96 und der nahen Ebene 90 liegt, durch einen Punkten $v'_3$ ersetzt werden, welcher auf der nahen Ebene 90 liegt. Die Koordinaten der Punkts $v'_3$ lauten folgendermaßen:

$$v'_3 = v_1 + t_3(v_3 - v_1), \ t_3 \in (0, 1). \tag{5}$$

Das neue Dreieck ($v_1$, $v'_2$, $v'_3$) liegt somit hinter der nahen Ebene und ist ferner ein Teil der Polygons, das durch Schneiden des Dreiecks ($v_1$, $v_2$, $v_3$) erhalten wird. Daher kann das neue oder Hilfsdreieck verwendet werden, um die Ausrichtung des ursprünglichen Dreiecks $v_1$, $v_2$, $v_3$ zu bestimmen, selbst wenn einer oder zwei Eckpunkte des ursprünglichen Dreiecks vor der nahen Ebene 90 bzw. hinter dem Beobachterstandpunkt 96 lagen. Die z-Komponente des Normalenvektors auf dem Hilfsdreieck ($v_1$, $v'_2$, $v'_3$), die parallel zur Beobachterachse 97 ist, welche die Ausrichtung dieses Dreiecks angibt, kann auf folgende Art und Weise, jedoch in homogenen Koordinaten erhalten werden:

$$a \ = \ \left(\frac{x'_2}{w'_2} - \frac{x_1}{w_1}\right)\left(\frac{y'_3}{w'_3} - \frac{y_1}{w_1}\right) \\ - \left(\frac{y'_2}{w'_2} - \frac{y_1}{w_1}\right)\left(\frac{x'_3}{w'_3} - \frac{x_1}{w_1}\right) \tag{6}$$

$$= \ \left(\frac{x_1 + t_2(x_2 - x_1)}{w_1 + t_2(w_2 - w_1)} - \frac{x_1}{w_1}\right)\left(\frac{y_1 + t_3(y_3 - y_1)}{w_1 + t_3(w_3 - w_1)} - \frac{y_1}{w_1}\right) \\ - \left(\frac{y_1 + t_2(y_2 - y_1)}{w_1 + t_2(w_2 - w_1)} - \frac{y_1}{w_1}\right)\left(\frac{x_1 + t_3(x_3 - x_1)}{w_1 + t_3(w_3 - w_1)} - \frac{x_1}{w_1}\right) \tag{7}$$

In der Gleichung 7 befinden sich lediglich homogene Koordinaten des ursprünglichen Dreiecks sowie die durch Schneiden mit der nahen Ebene 90 erhaltenen Parameter $t_2$ und $t_3$. Da nicht die Fläche eines Dreiecks an sich berechnet werden soll, sondern lediglich die Ausrichtung der z-Komponente des Normalenvektors auf das Dreieck muß Gleichung (7) nicht vollständig gelöst werden, sondern es muß lediglich das Vorzeichen von a erhalten werden.

Um das Vorzeichen zu erhalten, können alle positiven Faktoren aus der Gleichung (7) herausdividiert werden, was in den folgenden Gleichungen (8) und (9) durchgeführt worden ist.

$$a \overbrace{w_1^2}^{>0} \overbrace{(w_1 \div t_2(w_2 - w_1))}^{>0} \overbrace{(w_1 \div t_3(w_3 - w_1))}^{>0} \qquad (8)$$
$$= (w_1(x_1 + t_2(x_2 - x_1)) - x_1(w_1 \div t_2(w_2 - w_1))) \cdot$$
$$(w_1(y_1 + t_3(y_3 - y_1)) - y_1(w_1 \div t_3(w_3 - w_1))) -$$
$$(w_1(x_1 + t_3(x_3 - x_1)) - x_1(w_1 + t_3(w_3 - w_1))) \cdot$$
$$(w_1(y_1 + t_2(y_2 - y_1)) - y_1(w_1 \div t_2(w_2 - w_1)))$$
$$= \underbrace{w_1}_{>0} \underbrace{t_2}_{>0} \underbrace{t_3}_{>0} \cdot \qquad (9)$$
$$(w_1(x_2 y_3 - x_3 y_2) +$$
$$w_2(x_3 y_1 - x_1 y_3) +$$
$$w_3(x_1 y_2 - x_2 y_1))$$

Es sei darauf hingewiesen, daß die Gleichungen (6) bis (9) lediglich Dreiecke betreffen, die zum Teil vor dem Beobachterstandpunkt 96 angeordnet sind. Dies bedeutet jedoch zugleich, daß mindestens ein Eckpunkt eine positive homogene Koordinate w hat. Bei der perspektivischen Projektion, die vorzugsweise in dem Schritt des Transformierens 10 beinhaltet ist, werden ja bekannterweise die x- und y-Koordinaten eines Punktes durch die Koordinate z geteilt. Dies bewirkt, daß Dreiecke, die weiter weg vom Beobachter angeordnet sind, auch kleiner erscheinen, da sie "weiter hinten" sind. Eine perspektivische Projektionsmatrix arbeitet derart, daß sie den z-wert ihres Eingabevektors in den w-Wert ihres Ausgabevektors unter Berücksichtigung entsprechender Skalierungen kopiert. Daher haben Punkte hinter dem Beobachter immer einen negativen Wert w, während Punkte vor dem Beobachter immer einen positiven Wert w haben werden.

Wenn also berücksichtigt wird, daß alle entsprechenden Terme in den Gleichungen (8) und (9) positive Werte haben, ergibt sich folgende Gleichung zum Bestimmen der Ausrichtung eines Dreiecks mit Eckpunkten in homogenen Koordinaten:

$$a' = w_1(x_2 y_3 - x_3 y_2) + w_2(x_3 y_1 - x_1 y_3) + w_3(x_1 y_2 - x_2 y_1) \qquad (10)$$

Aus dieser Gleichung ist ersichtlich, daß die Abschneideparameter $t_1$ und $t_2$ wieder verschwunden sind. Dies ist nicht verwunderlich, da das Abschneiden an sich nichts an der Ausrichtung des Dreiecks ändert, da das Hilfsdreieck Teil des ursprünglichen Dreiecks war und damit der Normalenvektor auf dem Hilfsdreieck immer parallel zum Normalenvektor des gesamten Dreiecks ist, aus dem das Hilfsdreieck hervorgegangen ist. Gleichung (10) zeigt ferner, daß die vorliegende Erfindung nicht auf den Fall des Frustrum-clippings beschränkt ist, sondern universell anwendbar ist, da Gleichung (10) keine Informationen über das Abschniedevolumen aufweist. Der Fall des Frustrum-Clippings ist lediglich ein anschaulicher Fall von vielen zur Erklärung der vorliegenden Erfindung.

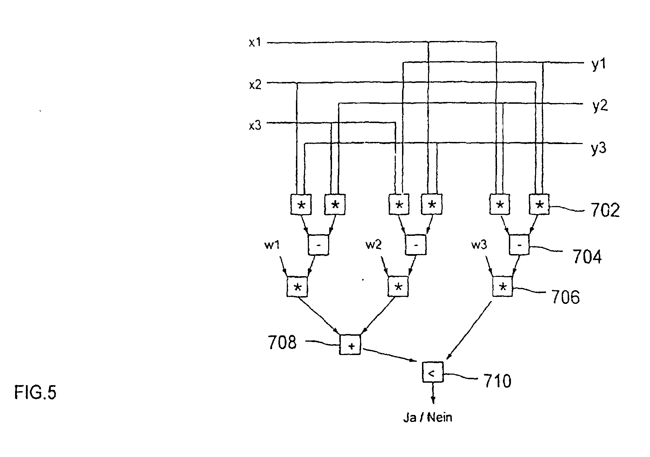

Fig. 5 zeigt ein Ausführungsbeispiel einer fest verdrahteten Schaltung zum Berechnen der Ausrichtung eines Dreiecks, das in homogenen Koordinaten gegeben ist. Die erfindungsgemäße Schaltung ist in der Lage, sehr schnell das Vorzeichen von a' aus Gl. (10) zu bestimmen. Die Schaltung umfaßt sechs Multiplizierer 702 zum Durchführen der Multiplikationen der entsprechenden Koordinatenpaare. Ferner umfaßt die Schaltung drei Subtrahierer 704 zum Durchführen der in Gl. (10) angesprochenen Subtraktionen. Die Ergebnisse der Subtrahierer werden anschließend mittels dreier Multiplizierer 706 mit den entsprechenden w-Koordinaten multipliziert. Ein Summierer 708 bildet die Summe der ersten beiden Terme, wobei diese Summe mittels eines Komparators 710 mit dem Ergebnis des rechten Multiplizierers verglichen wird. Gibt der Komparator 710 ein "JA" aus, d. h. daß das Ergebnis des Summierers 708 kleiner als das Ergebnis des rechten Multiplizieres 706 ist, so bedeutet dies, daß die Punkte im Objektkoordinatensystem im Uhrzeigersinn angeordnet sind. Gibt der Komparator dagegen ein "NEIN" aus, so sind die Eckpunkte des Dreiecks im Objektkoordinatensystem gegen den Uhrzeigersinn angeordnet. Durch zyklisches Vertauschen von x, y, und w an den Eingängen der Schaltung kann die Ausrichtung eines Dreiecks bezüglich einer anderen als der z-Achse berechnet werden.

Zur weiteren Effizienzsteigerung werden vorzugsweise Dreiecke von der Berechnung ausgeschlossen, bei denen alle drei Eckpunkte außerhalb des Schneidevolumens liegen. Dieser Vorgang wird als "Trivial Clipping" bezeichnet. Solche Dreiecke können somit ebenfalls vor dem Beleuchten erkannt und verworfen werden, um den Prozessoraufwand für Graphikverarbeitungsvorrichtungen weiter zu reduzieren.

Beim Trivial-Clipping werden die Seitenebenen des Beobachtungsvolumens einzeln betrachtet. Wenn alle drei Eckpunkte einer Dreiecks außerhalb einer bestimmten Ebene liegen, dann liegt das Dreieck vollständig außerhalb des Beobachtungsvolumens. Die Tatsache allein, daß alle Eckpunkte außerhalb von verschiedenen Ebenen liegen, ist kein hinreichendes Kriterium. Es sei dabei z. B. an ein Dreieck gedacht, das ein Beobachtungsvolumen durchschneidet. Wenn beispielsweise zwei Punkte rechts der rechten Ebene und ein Punkt links der linken Ebene liegt, dann ist es möglich, daß das Dreieck sichtbar ist, obwohl kein einziger Eckpunkt sichtbar ist. Falls jedoch alle drei Punkte rechts der rechten Ebenen liegen würden, dann wäre das Dreick nicht sichtbar. Solche Dreiecke werden vorzugsweise vor dem Berechnung der Ausrichtung von Dreiecken durch das Trivial-Clipping verworfen.

Zusammenfassend läßt sich somit feststellen, daß Gleichung (10) eine Berechnung der Ausrichtung eines Dreiecks in homogenen Koordinaten ermöglicht. Es ist somit nicht mehr erforderlich, mit der Ausrichtungsbestimmung der Dreiecke zu warten, bis das Schneiden und Beleuchten bereits durchgeführt ist. Erfindungsgemäß wird das Verwerfen bzw. Feststellen der Beleuchtungsart im Falle einer zweiseitigen Beleuchtung bereits vor dem Beleuchten und Schneiden durchgeführt, was statistisch gesehen eine Reduktion der Schneideoperationen bzw. der Beleuchtungsoperationen um 50% ermöglicht.

## Patentansprüche

1. Vorrichtung zum graphischen Darstellen eines durch eine Mehrzahl von Dreiecken definierten Objekts auf einer Anzeigefläche, wobei die Dreiecke jeweils durch drei Punkte ($P_1$, $P_2$, $P_3$) in homogenen Objektkoordinaten gegeben sind, mit folgenden Merkmalen:

   einer Einrichtung zum Transformieren (10) der homogenen Objektkoordinaten der Mehrzahl von Dreiecken in homogene Schneidekoordinaten eines Schneidekoordinatensystems, das einen Beobachterstandpunkt (96) aufweist, der auf einer senkrecht zu der Anzeigefläche gerichteten Beobachtungsachse (97) liegt;

   einer Einrichtung zum Feststellen (20) der Lage des Beobachterstandpunkts (96) bezüglich jedes der Mehrzahl von Dreiecken durch Bestimmen der Ausrichtung jedes Dreiecks der Mehrzahl von Dreiecken in dem Schneidekoordinatensystem bezüglich des Beobachterstandpunkts (96) unter Verwendung der homogenen Schneidekoordinaten der Mehrzahl von Dreiecken, wobei die Einrichtung zum Feststellen (20) der Lage des Beobachterstandpunkts (96) bezüglich jedes der Mehrzahl von Dreiecken zum Bestimmen der Ausrichtungen der Dreiecke angeordnet ist, um folgende Gleichung auszuführen:

$$a' = w_1(x_2 y_3 - x_3 y_2) + w_2(x_3 y_1 - x_1 y_3) + w_3(x_1 y_2 - x_2 y_1)$$

   wobei ($x_1$, $y_1$, $w_1$), ($x_2$, $y_2$, $w_2$) und ($x_3$, $y_3$, $w_3$) homogene Schneidekoordinaten der drei Eckpunkte ($P_1$, $P_2$, $P_3$) des Dreiecks sind, und wobei das Vorzeichen von a' anzeigt, welche von zwei Ausrichtungen bezüglich des Beobachterstandpunkts (96) jedes Dreieck hat;

   einer Einrichtung zum Markieren (30) der Lage des Beobachterstandpunkts (96) bezüglich jedes Dreiecks der Mehrzahl von Dreiecken in Zuordnung zu den homogenen Objektkoordinaten der Mehrzahl von Dreiecken; und

   einer Einrichtung zum Verarbeiten (40) der in den Objektkoordinaten gegebenen Dreiecke unter Verwendung der markierten Lage des Beobachterstandpunkts (96) bezüglich jedes Dreiecks, um das Objekt auf der Anzeigefläche graphisch darzustellen, wobei die Einrichtung zum Verarbeiten (40) angeordnet ist, um die in dem Objektkoordinatensystem gegebenen Dreiecke, die von dem Beobachterstandpunkt (96) weg gerichtet sind, zu verwerfen.

2. Vorrichtung nach Anspruch 1, bei der die Einrichtung zum Verarbeiten (40) folgende Merkmale aufweist:

   eine Einrichtung zum Transformieren (42) lediglich der nicht verworfenen Dreiecke in ein Augenkoordinatensystem, das zu dem Objektkoordinatensystem isometrisch ist; und

   eine Einrichtung zum Beleuchten (43) der in das Augenkoordinatensystem transformierten Dreiecke.

3. Vorrichtung nach Anspruch 1, bei der die Einrichtung zum Verarbeiten (40) folgende Merkmale aufweist:
eine Einrichtung zum Beleuchten lediglich der nicht verworfenen Dreiecke im Objektkoordinatensystem;

4. Vorrichtung nach Anspruch 1, bei der die Einrichtung zum Verarbeiten (40) folgende Merkmale aufweist:

eine Einrichtung zum Bestimmen der Beleuchtungsart (41) jedes Dreiecks im Falle eines zweiseitigen Beleuchtens aufgrund der markierten Lage des Beobachterstandpunkts (96) bezüglich jedes Dreiecks, derart, daß lediglich für die Seite eines Dreiecks, die zu dem Beobachterstandpunkt (96) hin gerichtet ist, die Beleuchtungsart bestimmt wird;

eine Einrichtung zum Transformieren (42) der Mehrzahl von Dreiecken in ein Augenkoordinatensystem, das zu dem Objektkoordinatensystem isometrisch ist; und

eine Einrichtung zum Beleuchten (43) der transformierten Dreiecke unter Verwendung der bestimmten Beleuchtungsart, derart, daß lediglich die Seite eines Dreiecks der Mehrzahl von Dreiecken beleuchtet wird, die zu dem Beobachter hin gerichtet sind.

5. Vorrichtung nach Anspruch 1, bei der die Einrichtung zum Verarbeiten (40) folgende Merkmale aufweist:

eine Einrichtung zum Bestimmen der Beleuchtungsart jedes Dreiecks im Falle eines zweiseitigen Beleuchtens aufgrund der markierten Lage des Beobachterstandpunkts (96) bezüglich jedes Dreiecks, derart, daß lediglich für die Seite eines Dreiecks, die zu dem Beobachterstandpunkt (96) hin gerichtet ist, die Beleuchtungsart bestimmt wird;

eine Einrichtung zum Beleuchten der Dreiecke in Objektkoordinaten unter Verwendung der bestimmten Beleuchtungsart, derart, daß lediglich die Seite eines Dreiecks der Mehrzahl von Dreiecken beleuchtet wird, die zu dem Beobachter hin gerichtet sind.

6. Vorrichtung nach einem der vorhergehenden Ansprüche, bei der die Einrichtung zum Verarbeiten (40) ferner folgende Merkmale aufweist:

eine Einrichtung zum Transformieren (44) der beleuchteten Dreiecke in den Schneideraum; und

eine Einrichtung zum Schneiden (45) der in den Schneideraum transformierten Dreiecke.

7. Vorrichtung nach einem der vorhergehenden Ansprüche, bei der die Einrichtung zum Transformieren (10) der homogenen Objektkoordinaten der Mehrzahl von Dreiecken in die homogenen Schneidekoordinaten eine Transformationsmatrix aufweist, die das Ergebnis einer Multiplikation einer ersten Transformationsmatrix für eine Transformation von dem objektkoordinatensystem in ein Augenkoordinatensystem, das zu dem Objektkoordinatensystem isometrisch ist und in dem beleuchtet werden kann, mit einer zweiten Transformationsmatrix von dem Augenkoordinatensystem in das Schneidekoordinatensystem ist.

8. Vorrichtung nach einem der vorhergehenden Ansprüche, die ferner folgendes Merkmal aufweist:
eine der Einrichtung zum Feststellen (20) vorgeschaltete Einrichtung zum Ermitteln, ob nicht alle Eckpunkte eines Dreiecks außerhalb einer Ebene des Schneidevolumens liegen, das die auf der Anzeigefläche angezeigten Punkte auswählt, wobei das Dreieck verworfen wird, wenn alle Eckpunkte außerhalb einer Ebene des Schneidevolumens liegen.

9. Vorrichtung nach einem der vorhergehenden Ansprüche, bei der die Einrichtung zum Feststellen (20) folgende Merkmale aufweist:

eine Einrichtung zum Definieren einer Ebene (90), die senkrecht zu der Beobachterachse (97) ist, und die von dem Beobachterstandpunkt (96) auf der Beobachterachse (97) entfernt angeordnet ist;

eine Einrichtung zum Bestimmen, ob ein erster Eckpunkt ($P_1$) eines Dreiecks bezüglich des Beobachterstandpunkts (96) hinter der Beobachtungsebene angeordnet ist;

eine Einrichtung zum Ermitteln des Schnittpunkts der Verbindungslinie, die zwischen einem zweiten Eckpunkt

($P_2$) des Dreiecks, der zwischen dem Beobachterstandpunkt (96) und der Ebene (90) liegt, und dem ersten Eckpunkt ($P_1$) verläuft, mit der Ebene (90), wenn ein erster Eckpunkt ($P_1$) des Dreiecks bezüglich des Beobachterstandpunkts (96) hinter der Beobachtungsebene angeordnet ist;

eine Einrichtung zum Ermitteln des Schnittpunkts der Verbindungslinie, die zwischen einem dritten Eckpunkt ($P_3$) des Dreiecks und dem ersten Eckpunkt ($P_1$) verläuft, mit der Ebene (90), falls der dritte Eckpunkt ($P_3$) ebenfalls zwischen dem Beobachterstandpunkt (96) und der Ebene (90) liegt;

eine Einrichtung zum Berechnen des Vorzeichens der zur Beobachtungsebene senkrechten Komponente (a') des Normalenvektors auf der Fläche eines Hilfsdreiecks, das durch die in (b3) und (b4) berechneten Schnittpunkte und den ersten Eckpunkt ($P_1$) gegeben ist, wobei das Vorzeichen die Ausrichtung des Dreiecks anzeigt.

10. Vorrichtung nach einem der vorhergehenden Ansprüche, die angeordnet ist, daß die Ausrichtung jedes Dreiecks im Objektkoordinatensystem durch einen Drehsinn vorbestimmt ist, der sich ergibt, wenn der erste Eckpunkt ($P_1$) mit dem zweiten Eckpunkt ($P_2$), der zweite Eckpunkt ($P_2$) mit dem dritten Eckpunkt ($P_3$) und der dritte Eckpunkt ($P_3$) mit dem ersten Eckpunkt ($P_1$) verbunden werden.

11. Vorrichtung nach einem der vorhergehenden Ansprüche, die derart angeordnet ist, daß das Objekt ein dreidimensionaler Körper ist, wobei die Ausrichtung jedes Dreiecks anzeigt, ob das Dreieck ein Teil einer äußeren oder einer inneren Begrenzung des Körpers ist.

12. Vorrichtung nach einem der vorhergehenden Ansprüche, bei der die Einrichtung zum Transformieren (10) angeordnet ist, um eine Rotation, eine Translation, eine Skalierung und eine perspektivische Projektion des Dreiecks auszuführen, wobei die genannten Operationen alle in homogenen Koordinaten durchgeführt werden.

13. Vorrichtung nach einem der Ansprüche 6 bis 12, bei der die Einrichtung zum Verarbeiten (40) ferner folgende Merkmale aufweist:

eine Einrichtung zum Dehomogenisieren (46) der homogenen Koordinaten (x, y, z, w) jedes geschnittenen Dreiecks, um inhomogene Koordinaten (x, y, z) für Eckpunkte der geschnittenen Dreiecke zu erhalten;

eine Einrichtung zum Überführen der inhomogenen Koordinaten in Anzeigeflächenkoordinaten; und

eine Einrichtung zum Anzeigen (47) der geschnittenen Dreiecke auf der Anzeigefläche.

14. Vorrichtung nach Anspruch 13, bei der die Anzeigefläche ein Monitor ist, und bei der die Anzeigeflächenkoordinaten Pixelkoordinaten des Monitors sind, wobei der Ursprung des Pixelkoordinatensystems in Monitormitte liegt, und wobei die Beobachterachse (97) durch diesen Ursprung verläuft, und ebenfalls senkrecht zu dem Pixelkoordinatensystem ist.

15. Verfahren zum graphischen Darstellen eines durch eine Mehrzahl von Dreiecken definierten Objekts auf einer Anzeigefläche, wobei die Dreiecke jeweils durch drei Punkte ($P_1$, $P_2$, $P_3$) in homogenen Objektkoordinaten gegeben sind, mit folgenden Schritten:

Transformieren (10) der homogenen Objektkoordinaten der Mehrzahl von Dreiecken in homogene Schneidekoordinaten eines Schneidekoordinatensystems, das einen Beobachterstandpunkt (96) aufweist, der auf einer senkrecht zu der Anzeigefläche gerichteten Beobachtungsachse (97) liegt;

Feststellen (20) der Lage des Beobachterstandpunkts (96) bezüglich jedes der Mehrzahl von Dreiecken durch Bestimmen der Ausrichtung jedes Dreiecks der Mehrzahl von Dreiecken in dem Schneidekoordinatensystem bezüglich des Beobachterstandpunkts (96) unter Verwendung der homogenen Schneidekoordinaten der Mehrzahl von Dreiekken, wobei die Einrichtung zum Feststellen (20) der Lage des Beobachterstandpunkts (96) bezüglich jedes der Mehrzahl von Dreiecken zum Bestimmen der Ausrichtungen der Dreiecke angeordnet ist, um folgende Gleichung auszuführen:

$$a' = w_1(x_2 y_3 - x_3 y_2) + w_2(x_3 y_1 - x_1 y_3) + w_3(x_1 y_2 - x_2 y_1)$$

wobei $(x_1, y_1, w_1)$, $(x_2, y_2, w_2)$ und $(x_3, y_3, w_3)$ homogene Schneidekoordinaten der drei Eckpunkte $(P_1, P_2, P_3)$ des Dreiecks sind, und wobei das Vorzeichen von a' anzeigt, welche von zwei Ausrichtungen bezüglich des Beobachterstandpunkts (96) jedes Dreieck hat;

Markieren (30) der Lage des Beobachterstandpunkts (96) bezüglich jedes Dreiecks der Mehrzahl von Dreiecken in zuordnung zu den homogenen Objektkoordinaten der Mehrzahl von Dreiecken; und

Verarbeiten (40) der in den Objektkoordinaten gegebenen Dreiecke unter Verwendung der markierten Lage des Beobachterstandpunkts (96) bezüglich jedes Dreiecks, um das Objekt auf der Anzeigefläche graphisch darzustellen, wobei der Schritt des Verarbeitens (40) das Verwerfen der in dem Objektkoordinatensystem gegebenen Dreiecke, die von dem Beobachterstandpunkt (96) weg gerichtet sind, umfaßt.

**Claims**

1. A device for the graphic representation on a display surface of an object defined by a plurality of triangles which are respectively specified by three points $(P_1, P_2, P_3)$ in homogeneous object coordinates, comprising the following features:

   a device for transforming (10) the homogeneous object coordinates of the plurality of triangles into homogeneous clip coordinates of a clip coordinate system with an observer standpoint (96) located on an observation axis (97) which is perpendicular to the display surface;

   a device for determining (20) the position of the observer standpoint (96) in relation to each of the plurality of triangles by determining the orientation of each triangle of the plurality of triangles in the clip coordinate system with respect to the observer standpoint (96) using the homogeneous clip coordinates of the plurality of triangles, where the device for determining (20) the position of the observer standpoint (96) in relation to each of the plurality of triangles is designed to execute the following equation to determine the orientations of the triangles:

$$a' = w_1(x_2y_3-x_3y_2)+w_2(x_3y_1-x_1y_3)+w_3(x_1y_2-x_3y_1)$$

   where $(x_1, y_1, w_1)$, $(x_2, y_2, w_2)$ and $(x_3, y_3, w_3)$ are homogeneous clip coordinates of the three vertices $(P_1, P_2, P_3)$ of the triangle and where the sign of a' indicates which of two orientations with respect to the observer standpoint (96) each triangle has;

   a device for marking (30) the position of the observer standpoint (96) in relation to each triangle of the plurality of triangles in association with the homogeneous object coordinates of the plurality of triangles; and

   a device for processing (40) the triangles specified in the object coordinates using the marked position of the observer standpoint (96) in relation to each triangle so as to graphically represent the object on the display surface, where the device for processing (40) is designed to cull the triangles specified in the object coordinate system which are directed away from the observer standpoint (96).

2. A device according to claim 1, wherein the device for processing (40) comprises the following features:

   a device for transforming (42) only the unculled triangles into an eye coordinate system which is isometric to the object coordinate system; and

   a device for lighting (43) the triangles transformed into the eye coordinate system.

3. A device according to claim 1, wherein the device for processing (40) comprises the following features:
   a device for lighting only the unculled triangles in the object coordinate system.

4. A device according to claim 1, wherein the device for processing (40) comprises the following features:

   a device for determining the type of lighting (41) of each triangle in the case of two-sided lighting on the basis of the marked position of the observer standpoint (96) in relation to each triangle in such a way that the type of lighting is determined only for the side of a triangle which is directed towards the observer standpoint (96);

a device for transforming (42) the plurality of triangles into an eye coordinate system which is isometric to the object coordinate system; and

a device for lighting (43) the transformed triangles using the determined type of lighting in such a way that only the side of a triangle of the plurality of triangles which is directed towards the observer is lit.

**5.** A device according to claim 1, wherein the device for processing (40) comprises the following features:

a device for determining the type of lighting of each triangle in the case of two-sided lighting on the basis of the marked position of the observer standpoint (96) in relation to each triangle in such a way that the type of lighting is determined only for the side of a triangle which is directed towards the observer standpoint (96); and a device for lighting the triangles in object coordinates using the determined type of lighting in such a way that only the side of a triangle of the plurality of triangles which is directed towards the observer is lit.

**6.** A device according to one of the preceding claims, wherein the device for processing (40) also comprises the following features:

a device for transforming (44) the lit triangles into the clip space; and

a device for clipping (45) the triangles transformed into the clip space.

**7.** A device according to one of the preceding claims, wherein the device for transforming (10) the homogeneous object coordinates of the plurality of triangles into the homogeneous clip coordinates comprises a transformation matrix which is the result of a multiplication of a first transformation matrix, for a transformation from the object coordinate system into an eye coordinate system which is isometric to the object coordinate system and in which lighting can take place, and a second transformation matrix from the eye coordinate system into the clip coordinate system.

**8.** A device according to one of the preceding claims, which also comprises the following feature:

a device preceding the device for determining (20) which establishes whether all the vertices of a triangle lie outside a plane of the clip volume which selects the points displayed on the display surface, the triangle being culled if all the vertices lie outside a plane of the clip volume.

**9.** A device according to one of the preceding claims, wherein the device for determining (20) comprises the following features:

a device for defining a plane (90) which is perpendicular to the observer axis (97) and which is situated at a distance from the observer standpoint (96) on the observer axis (97);

a device for determining whether a first vertex ($P_1$) of a triangle is located behind the observation plane with respect to the observer standpoint (96);

a device for finding the point of intersection with the plane (90) of the line connecting a second vertex ($P_2$) of the triangle, which is located between the observer standpoint (96) and the plane (90), and the first vertex ($P_1$) if a first vertex (P1) of the triangle is located behind the observation plane with respect to the observer standpoint (96);

a device for finding the point of intersection with the plane (90) of the line connecting a third vertex ($P_3$) of the triangle and the first vertex ($P_1$) if the third vertex (P3) also lies between the observer standpoint (96) and the plane (90); and

a device for calculating the sign of the component (a'), perpendicular to the observation plane, of the normal vector to the surface of an auxiliary triangle which is defined by the intersection points calculated in (b3) and (b4) and the first vertex ($P_1$), the sign indicating the orientation of the triangle.

**10.** A device according to one of the preceding claims, which is so designed that the orientation of each triangle in the object coordinate system is predetermined by a sense of rotation which results when the first vertex ($P_1$) is connected to the second vertex ($P_2$), the second vertex ($P_2$) is connected to the third vertex ($P_3$) and the third vertex (P3) is connected to the first vertex ($P_1$).

**11.** A device according to one of the preceding claims, which is so designed that the object is a three-dimensional body, the orientation of each triangle indicating whether the triangle is part of an outer or inner boundary of the body.

**12.** A device according to one of the preceding claims, wherein the device for transforming (10) is designed to perform a rotation, a translation, a scaling and a perspective projection of the triangle, all these operations being executed in homogeneous coordinates.

**13.** A device according to one of the claims 6 to 12, wherein the device for processing (40) also comprises the following features:

a device for dehomogenizing (46) the homogeneous coordinates (x, y, z, w) of each clipped triangle so as to obtain inhomogeneous coordinates (x, y, z) for vertices of the clipped triangles;

a device for converting the inhomogeneous coordinates into display surface coordinates; and

a device for displaying (47) the clipped triangles on the display surface.

**14.** A device according to claim 13, wherein the display surface is a monitor and the display surface coordinates are pixel coordinates of the monitor and where the origin of the pixel coordinate system is located in the middle of the monitor and where the observer axis (97) passes through this origin and is also perpendicular to the pixel coordinate system.

**15.** A method for the graphic representation on a display surface of an object defined by a plurality of triangles which are respectively specified by three points ($P_1$, $P_2$, $P_3$) in homogeneous object coordinates, comprising the following steps:

transforming (10) the homogeneous object coordinates of the plurality of triangles into homogeneous clip coordinates of a clip coordinate system with an observer standpoint (96) located on an observation axis (97) which is perpendicular to the display surface;

determining (20) the position of the observer standpoint (96) in relation to each of the plurality of triangles by determining the orientation of each triangle of the plurality of triangles in the clip coordinate system with repect to the observer standpoint (96) using the homogeneous clip coordinates of the plurality of triangles, where the step of determining (20) the position of the observer standpoint (96) in relation to each of the plurality of triangles is designed to execute the following equation to determine the orientations of the triangles:

$$a' = w_1(x_2 y_3 - x_3 y_2) + w_2(x_3 y_1 - x_1 y_3) + w_3(x_1 y_2 - x_2 y_1)$$

where ($x_1$, $y_1$, $w_1$), ($x_2$, $y_2$, $w_2$) and ($x_3$, $y_3$, $w_3$) are homogeneous clip coordinates of the three vertices ($P_1$, $P_2$, $P_3$) of the triangle and where the sign of a' indicates which of two orientations with respect to the observer standpoint (96) each triangle has;

marking (30) the position of the observer standpoint (96) in relation to each triangle of the plurality of triangles in association with the homogeneous object coordinates of the plurality of triangles; and

processing (40) the triangles specified in the object coordinates using the marked position of the observer standpoint (96) in relation to each triangle so as to graphically represent the object on the display surface, where the step of processing (40) includes culling the triangles specified in the object coordinate system which are directed away from the observer standpoint (96).

**Revendications**

1. Dispositif pour représenter graphiquement sur la surface d'un écran un objet défini par une pluralité de triangles, dans lequel les triangles sont chacun donnés par trois points ($P_1$, $P_2$, $P_3$) en coordonnées homogènes rapportées à l'objet, présentant les caractéristiques suivantes :

   - un appareil pour transformer (10) les coordonnées homogènes, rapportées à l'objet, de la pluralité de triangles en coordonnées homogènes d'un système de coordonnées, rapportées au plan de détourage, qui présente un point d'observation (96) qui se situe sur un axe d'observation (97) orienté perpendiculairement à la surface de l'écran ;

   - un appareil pour déterminer (20) la position du point d'observation (96) par rapport à chacun de la pluralité de triangles en déterminant l'orientation de chaque triangle de la pluralité de triangles dans le système de coordonnées rapportées au plan de détourage par rapport au point d'observation (96), en employant les coordonnées homogènes, rapportées au plan de détourage, de la pluralité de triangles, l'appareil prévu pour déterminer (20) la position du point d'observation (96) par rapport à chacun de la pluralité de triangles pour déterminer les orientations des triangles étant prévu pour résoudre l'équation suivante :

$$a' = w_1(x_2y_3 - x_3y_2) + w_2(x_3y_1 - x_1y_3) + w_3(x_1y_2 - x_2y_1)$$

   où ($x_1$, $y_1$, $w_1$), ($x_2$, $y_2$, $w_2$) et ($x_3$, $y_3$, $w_3$) sont des coordonnées homogènes, rapportées au plan de détourage, des trois sommets ($P_1$, $P_2$, $P_3$) du triangle, et où le signe de a' indique laquelle de deux orientations a chaque triangle par rapport au point d'observation (96) ;

   - un appareil pour repérer (30) la position du point d'observation (96) par rapport à chaque triangle de la pluralité de triangles en correspondance avec les coordonnées homogènes, rapportées à l'objet, de la pluralité de triangles ;

   - un appareil pour traiter (40) les triangles fournis dans les coordonnées rapportées à l'objet en employant la position repérée du point d'observation (96) par rapport à chaque triangle, pour représenter graphiquement l'objet sur la surface de l'écran, l'appareil pour réaliser ce traitement (40) étant prévu pour rejeter les triangles, fournis dans le système de coordonnées rapportées à l'objet, qui sont orientés du côté opposé au point d'observation (96).

2. Dispositif selon la revendication 1, dans le cas duquel l'appareil prévu pour le traitement (40) présente les caractéristiques suivantes:

   - un appareil pour transformer (42) uniquement les triangles non rejetés, dans un système de coordonnées, rapportées à l'observateur, qui soit isométrique avec le système de coordonnées rapportées à l'objet ;

   - un appareil pour éclairer (43) les triangles transformés dans le système de coordonnées rapportées à l'observateur.

3. Dispositif selon la revendication 1, dans le cas duquel l'appareil prévu pour le traitement (40) présente les caractéristiques suivantes:

   - un appareil pour éclairer, uniquement les triangles non rejetés, dans un système de coordonnées rapportées à l'objet.

4. Dispositif selon la revendication 1, dans le cas duquel l'appareil prévu pour le traitement (40) présente les caractéristiques suivantes :

   - un appareil pour déterminer le mode d'éclairement (41) de chaque triangle dans le cas d'un éclairement sur les deux faces sur la base de la position repérée du point d'observation (96) par rapport à chaque triangle, de façon que le mode d'éclairement ne soit déterminé que pour la face d'un triangle qui est orientée vers le point d'observation (96) ;

♦ un appareil pour transformer (42) la pluralité de triangles dans un système de coordonnées, rapportées à l'observateur, qui soit isométrique avec le système de coordonnées rapportées à l'objet ;

♦ un appareil pour l'éclairement (43) des triangles transformés en employant le mode d'éclairement déterminé, de façon que ne soit éclairée que la face d'un triangle de la pluralité de triangles qui est orientée vers l'observateur.

5. Dispositif selon la revendication 1, dans le cas duquel l'appareil prévu pour le traitement (40) présente les caractéristiques suivantes :

♦ un appareil pour déterminer le mode d'éclairement de chaque triangle dans le cas d'un éclairement sur les deux faces sur la base de la position repérée du point d'observation (96) par rapport à chaque triangle, de façon que le mode d'éclairement ne soit déterminé que pour la face d'un triangle qui est orientée vers le point d'observation (96) ;

♦ un appareil pour éclairer les triangles en coordonnées rapportées à l'objet, en employant le mode d'éclairement déterminé, de façon que ne soit éclairée que la face d'un triangle de la pluralité de triangles qui est orientée vers l'observateur.

6. Dispositif selon l'une des revendications précédentes, dans le cas duquel l'appareil prévu pour le traitement (40) présente en outre les caractéristiques suivantes:

♦ un appareil pour transformer (44) dans l'espace rapporté au plan de détourage les triangles éclairés ;

♦ un appareil pour détourer (45) les triangles transformés dans l'espace rapporté au plan de détourage.

7. Dispositif selon l'une des revendications précédentes, dans le cas duquel l'appareil prévu pour transformer (10) les coordonnées homogènes, rapportées à l'objet, de la pluralité de triangles en les coordonnées homogènes, rapportées au plan de détourage, présente une matrice de transformation qui est le résultat d'une multiplication d'une première matrice de transformation, pour une transformation des systèmes de coordonnées rapportées à l'objet en un système de coordonnées rapportées à l'observateur, système qui est isométrique au système de coordonnées rapportées à l'objet et dans lequel on peut procéder à l'éclairement, avec une seconde matrice de transformation pour passer du système de coordonnées rapportées à l'observateur en le système de coordonnées rapportées au plan de détourage.

8. Dispositif selon l'une des revendications précédentes, présentant en outre la caractéristique suivante :

♦ un appareil, monté en amont de l'appareil prévu pour déterminer (20), pour établir si tous les sommets d'un triangle ne se situent pas à l'extérieur d'un plan du volume, rapporté au plan de détourage, qui sélectionne les points affichés sur la surface de l'écran, le triangle étant rejeté si tous ses sommets se situent à l'extérieur d'un plan du volume rapporté au plan de détourage.

9. Dispositif selon l'une des revendications précédentes, dans le cas duquel l'appareil prévu pour déterminer (20) présente les caractéristiques suivantes:

♦ un appareil pour définir un plan (90) qui est perpendiculaire à l'axe d'observation (97) et qui est disposé sur l'axe d'observation (97), à distance du point d'observation (96) ;

♦ un appareil pour déterminer si un premier sommet ($P_1$) d'un triangle est disposé derrière le plan d'observation par rapport au point d'observation (96);

♦ un appareil pour déterminer le point d'intersection de la ligne de liaison qui passe par un second sommet ($P_2$) du triangle, situé entre le point d'observation (96) et le plan (90), et le premier sommet ($P_1$), avec le plan (90), lorsqu'un premier sommet ($P_1$) du triangle est disposé derrière le plan d'observation par rapport au point d'observation (96) ;

♦ un appareil pour déterminer le point d'intersection de la ligne de liaison qui passe par un troisième sommet ($P_3$) du triangle et le premier sommet ($P_1$), avec le plan (90), dans le cas où le troisième sommet ($P_2$) se situe

également entre le point d'observation (96) et le plan (90) ;

- ♦ un appareil pour calculer le signe des composantes (a') perpendiculaires au plan d'observation, du vecteur normal à la surface d'un triangle auxiliaire qui est donné par les points d'intersection calculés dans ($b_3$) et ($b_4$) et le premier sommet ($P_1$), ce signe indiquant l'orientation du triangle.

10. Dispositif selon l'une des revendications précédentes, prévu pour que l'orientation de chaque triangle dans le système de coordonnées rapportées à l'objet soit prédéterminée par un sens de rotation qui résulte du fait que le premier sommet ($P_1$) est relié au second sommet ($P_2$), le second sommet ($P_2$), au troisième sommet ($P_3$), et le troisième sommet ($P_3$), au premier sommet ($P_1$).

11. Dispositif selon l'une des revendications précédentes, prévu de façon que l'objet soit un corps tridimensionnel, dans lequel l'orientation de chaque triangle indique si le triangle est une partie d'une limitation extérieure ou d'une limitation intérieure du corps.

12. Dispositif selon l'une des revendications précédentes, dans lequel l'appareil prévu pour transformer (10) est prévu pour réaliser une rotation, une translation, un changement d'échelle et une projection perspective du triangle, dans lequel les opérations mentionnées sont toutes exécutées en coordonnées homogènes.

13. Dispositif selon l'une des revendications 6 à 12, dans lequel l'appareil prévu pour le traitement (40) présente en outre les caractéristiques suivantes:

- ♦ un appareil pour déshomogénéiser (46) les coordonnées homogènes (x, y, z, w) chaque triangle détouré, pour obtenir des coordonnées inhomogènes (x, y, z) pour les sommets des triangles détourés ;

- ♦ un appareil pour transformer les coordonnées inhomogènes en coordonnées rapportées à la surface de l'écran ;

- ♦ un appareil pour afficher (47) sur la surface de l'écran les triangles détourés.

14. Dispositif selon la revendication 13, dans lequel la surface de l'écran est un moniteur et dans lequel les coordonnées rapportées à la surface de l'écran sont les coordonnées rapportées aux pixels du moniteur, l'origine du système de coordonnées rapportées aux pixels se situant au milieu du moniteur, et l'axe d'observation (97) passant par cette origine et étant également perpendiculaire au système de coordonnées rapportées aux pixels.

15. Procédé pour représenter graphiquement sur la surface d'un écran un objet défini par une pluralité de triangles, dans lequel les triangles sont chacun donnés par trois points ($P_1$, $P_2$, $P_3$) en coordonnées homogènes rapportées à l'objet, présentant les pas suivants:

- ♦ transformer (10) les coordonnées homogènes, rapportées à l'objet, de la pluralité de triangles en coordonnées homogènes d'un système de coordonnées, rapportées au plan de détourage, qui présente un point d'observation (96) qui se situe sur un axe d'observation (97) orienté perpendiculairement à la surface de l'écran ;

- ♦ déterminer (20) la position du point d'observation (96) par rapport à chacun de la pluralité de triangles en déterminant l'orientation de chaque triangle de la pluralité de triangles dans le système de coordonnées rapportées au plan de détourage par rapport au point d'observation (96), en employant les coordonnées homogènes, rapportées au plan de détourage, de la pluralité de triangles, l'appareil prévu pour déterminer (20) la position du point d'observation (96) par rapport à chacun de la pluralité de triangles pour déterminer les orientations des triangles étant prévu pour résoudre l'équation suivante:

$$a' = w_1(x_2y_3 - x_3y_2) + w_2(x_3y_1 - x_1y_3) + w_3(x_1y_2 - x_2y_1)$$

où ($x_1$, $y_1$, $w_1$), ($x_2$, $y_2$, $w_2$) et ($x_3$, $y_3$, $w_3$) sont des coordonnées homogènes, rapportées au plan de détourage, des trois sommets ($P_1$, $P_2$, $P_3$) du triangle, et où le signe de a' indique laquelle de deux orientations a chaque triangle par rapport au point d'observation (96) ;

- ♦ repérer (30) la position du point d'observation (96) par rapport à chaque triangle de la pluralité de triangles en correspondance avec les coordonnées homogènes, rapportées à l'objet, de la pluralité de triangles ; et

- ◆ traiter (40) les triangles fournis dans les coordonnées rapportées à l'objet en employant la position repérée du point d'observation (96) par rapport à chaque triangle, pour représenter graphiquement l'objet sur la surface de l'écran, l'appareil pour réaliser ce traitement (40) étant prévu pour rejeter les triangles, fournis dans le système de coordonnées rapportées à l'objet, qui sont orientés du côté opposé au point d'observation (96).

FIG.1a

OBJEKTKOORDINATENSYSTEM

| TRANSFORMIEREN | — 10 |

SCHNEIDEKOORDINATENSYSTEM

| FESTSTELLEN DER LAGE DES BSP BEZÜGLICH JEDES DREIECKS | — 20 |

| MARKIEREN DER LAGE IN ZUORDNUNG ZU OBJEKTKOORDINATEN | — 30 |

OBJEKTKOORDINATENSYSTEM

| VERARBEITEN DER DREIECKE UNTER VERWENDUNG DER MARKIERTEN LAGE | — 40 |

FIG.1b     ○   OBJEKTKOORDINATENSYSTEM

| VERWERFEN / BESTIMMEN DER BELEUCHTUNGSART | 41 |

| TRANSFORMIEREN | 42 |

AUGENKOORDINATENSYSTEM

| BELEUCHTEN | 43 |

| TRANSFORMIEREN | 44 |

SCHNEIDEKOORDINATENSYSTEM

| SCHNEIDEN | 45 |

HOMOGENE KOORDINATEN

INHOMOGENE KOORDINATEN

| DEHOMOGENISIEREN | 46 |

ANZEIGEKOORDINATENSYSTEM

| ANZEIGEN | 47 |

FIG.2

FIG.3

Objektraum

Transformieren — 100

Augenraum

Beleuchten — 200

Schneideraum

Schneiden — 300

Dehomogenisieren — 400

homogene
Koordinaten

inhomogene
Koordinaten

Anzeigeraum

Verwerfen / Feststellen der
Beleuchtunsart — 500

Anzeigen — 600

FIG.4 (Stand der Technik)

FIG.5